# EUROPÄISCHE PATENTANMELDUNG

(11) **EP 1 075 920 A1**
(43) Veröffentlichungstag der Anmeldung: **14.02.2001**
(21) Anmeldenummer: 00115421.0
(22) Anmeldetag: 17.07.2000
(51) Int. Cl.: B29C 45/16, B22D 17/00, B29K 305/00

(54) **Verfahren zur Herstellung von Gummi-Metall-Bauteilen**

(30) Priorität: 11.08.1999 DE 19938015
(71) Anmelder: GUMMI-JÄGER KG GMBH & CIE, D-30625 Hannover (DE)
(72) Erfinder: Jäger, Andreas, Dr., 30559 Hannover (DE)
(74) Vertreter: Depmeyer, Lothar

(57) **Zusammenfassung**

Die Erfindung betrifft ein Verfahrenn zur Herstellung von Gummi-Matall-Bauteilen, wobei der Kautschuk in ein das Metallteil enthaltende Formnest eingespritzt und in diesem Formnest ausgehärtet ( vulkanisiert ) wird. Um von einer Anlieferung der Metallteile frei zu sein und eine Vorbereitung der Metallteile auf das Herstellverfahren überflüssig zu machen, wird erfindungsgemäss vorgeschlagen, das Verfahren so auszuführen, dass das Formnest auch zur Abformung des Metallteils dient, das zur Abformung des Kautschuks in seinem Formnest verbleibt.

## Beschreibung

Die Erfindung betrifft ein Verfahren zur Herstellung von Gummi-Metall-Bauteilen.

Hierbei soll unter der Bezeichnung Gummi nicht nur natürlicher bzw. synthetischer Kautschuk, sondern auch Elastomer-Kunststoff z.B. TPE ( Thermoplastische Elastomere ) verstanden werden. Zudem sind Gummi-Metall-Bauteile im Sinne der Erfindung solche Bauteile, bei denen der Gummi kraft- und/oder formschlüssig, vorzugsweise aber durch Haftung mit dem Metallteil verbunden ist.

Derartige Bauteile weisen im Regelfalle ein Metallteil auf, weil es zur Verfestigung und/oder Befestigung des Bauteils dient. So ist eine Verwendung z.B. für Dichtungen, Schwingungsdämpfer, verstärkte Profile, Bälge möglich.

Nach bekannten Vorschlägen wird zur Fertigung dieser Gummi-Metall-Bauteile zunächst das Metallteil für sich hergestellt z.B. durch Stanzen, Biegen oder durch spanabhebende Arbeitsgänge. Die so gefertigten Elemente werden in aller Regel den Kautschukverarbeitern zugestellt, die ihrerseits das Metallteil gewöhnlich als Einsatz für ein Formnest benutzen, um dann den Gummi abzuformen und dabei auch eine Verbindung zum Metallteil herbeizuführen.

Abgesehen davon, dass sich hierdurch nicht unerhebliche Probleme der Logistik ergeben können, müssen die Metallteile vor dem Einsetzen in das Formnst z.B. durch Entgraten und Entfetten vorbereitet werden.

Aufgrund der Erfindung sollen diese Nachteile vermieden werden. Es wird ein Verfahren angestrebt, das eine gemeinsame Erstellung der Bestandteile des Bauteils und deren Vereinigung ermöglichen.

Zur Lösung dieser Aufgabe wird erfindungsgemäss bei einem Verfahren der eingangs erwähnten Art vorgeschlagen, das zur Erstellung des Gummiteils benutzte Formnest auch zur Abformung des Metallteils zu nutzen, das zur Abformung des Kautschuks ( Gummis ) in seinem Formnest verbleibt. Das Metallteil wird also in dem Formnest abgeformt, in dem später zur Vervollständigung eines Bauteils der Kautschuk abgeformt bzw. auch vulkanisiert wird. Zweckmässigerweise wird man hierbei zur Abformung des Kautschuks und zur Abformung des Metallteils auf das Spitzgussverfahren zurückgreifen, weil dieses Verfahren eine schnelle und formgetreue Herstellung gewährleistet.

Das erfindungsgemässe Verfahren führt auch zu wärmetechnischen Gewinnen. Dies ist insb. dann der Fall, wenn die beiden Spritzvorgänge derart kurzfristig aufeinander folgen, dass die Vulkanisationswärme zumindest teilweise durch das Abkühlen des Metallteils aufgebracht wird. Daher ist es auch vorteilhaft, sog. Folgewerkzeuge zu benutzen, also z.B. karusselartig angeordnete Formnester zu verwenden, die eine schnelle Arbeitsfolge der beiden Spritzverfahren sicherstellen.

Um Arbeitsgänge zwischen den beiden Spritzvorgängen auszuschliessen, ist es vorteilhaft, dem einzuspritzenden Elastomer Haftvermittler einzuverleiben, sofern das Elastomer durch Haftung am Metallteil befestigt werden soll.

Zur Durchführung des erfindungsgemässen Verfahrens sind in besonderer Weise Metallegierungen geeignet, die bei Umgebungstemperatur dendritische Strukturen und durch Aufheizen einen semi-festen Aggregatzustand mit thixotropen Eigenschaften aufweisen. Legierungen dieser Art können enthalten : etwa 90 - 95 % Mg, etwa 5 - 9 % Al sowie Zn, Mn, Si, Cu, Ni, Fe ( und dgl. ) jeweils in Spuren unter etwa 1 %.

Weitere Einzelheiten der Erfindung werden anhand der Zeichnung erläutert, anhand der ein Ausführungsbeispiel der Erfindung dargestellt ist. Es zeigen :
Fig. 1 ein Werkzeug zur Herstellung von Gummi-Metall-Bauteilen z.B. eines Anschlagpuffers als Folgewerkzeug in schematischer Darstellung im senkrechten Schnitt, und zwar in Startstellung und
Fig. 2 - 4 je das Werkzeug gemäss Fig. 1, jedoch unter Darstellung weiterer Verfahrensschritte.

Das Unterteil 1 des Werkzeuges ist um seine Mittelachse 2 in Schritten je um 180° verschwenkbar. Es weist an diametral gegenüberliegenden Stellen Formnester 3, 4 auf, denen je ein Oberteil 5 als Deckel mit unterschiedlicher Eindringtiefe in die Formnester zugeordnet ist, die ihrerseits Trichter 6 mit Zuführbohrung 7 zum Einspritzen von Werkstoff aufweisen. Auf eine Darstellung der schwenkbaren Lagerung des Unterteils 1 und die Einrichtungen zum Schliessen der Formnester 3, 4 ist verzichtzet worden. Diese Vorrichtungen können beliebig und handelsüblich sein. Das Unterteil 1 weist zudem Auswerfer 8 für die fertigen Werkstücke auf.

Der Anschlagpuffer, der beispielsweise gefertigt werden soll, besteht aus einer unten liegenden Metallplatte 9 mit zwei sich nach unten erstreckenden Schenkeln 10 zur mechanischen Befestigung des Puffers z.B. an einem Maschinengestell und ferner einer auf der Metallplatte 9 festhaftend angeordneten Platte 11 aus Gummi

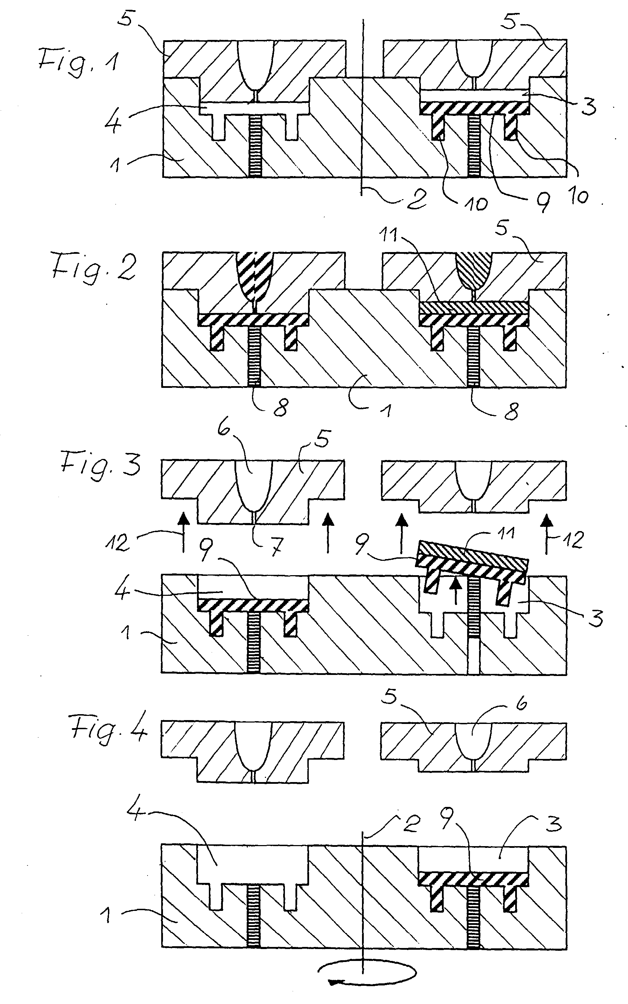

Bei der Ausgangsstellung des Werkzeuges gemäss Fig. 1 sei unterstellt, dass in das Formnest 3 bereits das Metallteil in Form der Metallplatte 9 mit Schenkeln 10 eingebracht worden sei.

In das Formnest 3 wird gemäss Fig. 2 nunmehr ein mit einem Haftmittel versetzter Gummi eingespritzt unter Bildung der Platte 11. Nach dem Spritzvorgang erfolgt die Vulkanisation. Gleichzeitig mit dem Einspritzen des Gummis wird in das Formnest 4 die nachstehend noch spezifizierte Metallegierung mit Hilfe einer 2-K-Spritzmaschine eingeführt unter Bildung der Metallplatte 9 mit Schenkeln 10. Dabei fliesst Wärme ab zum Formnest 3. Der Vulkanisiervorgang wird dadurch begünstigt.

Nach Beendigung der Vulkanisation wird gemäss Fig. 3 das fertige Gummi-Metall-Bauteil nach Anheben des Deckels 5 im Sinne der Pfeile 12 ausgestossen. Zugleich wird auch der Deckel 5 des Formnestes 4 angehoben.

Es erfolgt dann eine Verschwenkung des Unterteils 1 in die Stellung gemäss Fig. 4, und nach Schliessen der Formnester 3, 4 wird wiederum die Ausgangsstellung gemäss Fig. 1 erreicht.

Wichtig ist dabei, dass die unterschiedlich tief einwirkenden Deckel 5 den Verschwenkungen des Unterteils 1 nicht folgen.

An sich ist die Durchführung des Verfahrens nicht an besondere Werkstoffe gebunden; vorzugsweise wird jedoch das Metallteil ( 9, 10 ) als Magnesium-Träger mittels des 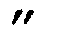 Thixo-molding"-Verfahrens aus einer Magnesiumlegierung. unter Anwendung des Spritzgussverfahrens hergestellt. Besonders gut ist hierzu eine Legierung aus etwa 90% Mg, etwa 9% Al und etwa 1% Zn geeignet. Diese Legierung hat eine Solidus-Temperatur von etwa 465°C und eine Liquidus-Temperatur von etwa 596°C sowie einen Solltemperaturbereich von etwa 580 - 590°C für die Verarbeitung. Die Werkzeugtemperatur beträgt beim Einspritzen der Legierung etwa 200 - 250°C. Demgegenüber betragen die Vulkanisationstemperaturen für gummielastische Werkstoffe etwa 160 - 190°C.

Es sei erwähnt, dass bei dem Werkzeug gemäss Zeichnung die Nesterfolge durch eine Schwenkbewegung des Werkzeuges um eine vorzugsweise senkrechte Achse erfolgt, jedoch versteht es sich, dass abweichende Folgekonstruktionen z.B. durch eine Linearbewegung des Werkzeuges möglich sind, wobei es auch hier zweckmäsig ist, eine Temperaturbeeinflussung der Formnester im vorerwähnten Sinne zuzulassen.

## Patentansprüche

1. Verfahren zur Herstellung von Gummi-Metall-Bauteilen, wobei der Kautschuk ( Gummi oder gummiähnliche Kunststoffe ) in ein das Metallteil enthaltendes Formnest eingespritzt und in diesem Formnest ausgehärtet (vulkanisiert) wird, dadurch gekennzeichnet, dass das Formnest auch zur Abformung des Metallteils dient, das zur Abformung des Kautschuks in seinem Formnest verbleibt.

2. Verfahren nach Anspruch 1, dadurch gekennzeichnet, dass sowohl die Abformung des Kautschuks als auch die Abformung des Metallteils nach dem Spritzgiessverfahren erfolgen.

3. Verfahren nach Anspruch 1 und 2, dadurch gekennzeichnet, dass die beiden Spritzgiessverfahren derart kurzfristig aufeinander durchgeführt werden, dass die Vulkanisationswärme zumindest teilweise durch Abkühlen des Metallteils aufgebracht wird.

4. Verfahren nach Anspruch 1 und 2, dadurch gekennzeichnet, dass dem Kautschuk vor dem Spritzen Haftvermittler einverleibt wird.

5. Die Verwendung einer Metallegierung für das Metallteil, die bei Umgebungstemperatur dendritische Strukturen und durch Aufheizen einen semi-festen Aggregatzustand mit thixotropen Eigenschaften aufweist, zur Durchführung des Verfahrens nach Anspruch 1.

6. Werkstoff für die Verwendung gemäss Anspruch 5, dadurch gekennzeichnet, dass die Metallegierung etwa 90 - 95 % Mg, etwa 5 - 9% Al sowie Zn, Mn, Cu, Ni, Fe ( und dgl. ) jeweils in Spuren unter etwa 1 % enthält.

7. Werkstoff nach Anspruch 6, dadurch gekennzeichnet, dass die Metallegierung etwa 90 % Mg, etwa 9 % Al und etwa 1 % Zn enthält.

8. Werkzeug zur Durchführung des Verfahrens nach Anspruch 1 und 3, dadurch gekennzeichnet, dass die Formnester (4,5) über das Unterteil (1) des Werkzeuges metallisch in wärmeleitender Verbindung stehen.

9. Vorrichtung zur Durchführung des Verfahrens nach Anspruch 1, gekennzeichnet durch ein Folgewerkzeug mit zwei oder mehreren Formnestern in der Weise, dass in unterschiedlichen Formnestern (3,4) praktisch zur gleichen Zeit das Metallteil (9,10) und der aus Kautschuk bestehende Teil (11) erstellbar sind.

10. Verfahren nach Anspruch 2, dadurch gekennzeichnet, dass für das Metallteil (9,10) ein Magnesium-Träger benutzt und das Spritzen nach dem 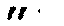 Thixo-molding"-Verfahren aus einer Magnesiumlegierung durchgeführt wird.
